# EUROPEAN PATENT APPLICATION

(11) **EP 4 332 152 A1**
(43) Date of publication of application: **06.03.2024**
(21) Application number: 23194398.6
(22) Date of filing: 30.08.2023
(51) Int. Cl.: C08J 5/04, C08L 29/04, D21C 9/00, D21H 11/20, B29C 45/00

(54) **CELLULOSE FIBRE REINFORCED POLYVINYL ALCOHOL COMPOSITE MATERIALS**

(30) Priority: 31.08.2022 EP 22193301
(71) Applicant: Aquapak IP Limited, Birmingham B31 5HE (GB)
(72) Inventor: WILLIAMS, John, Chirbury, SY15 6UD (GB); JAFARI, Farzaneh, Coventry, CV4 8FA (GB)
(74) Representative: Hepworth Browne

(57) **Abstract**

A method of manufacture of a composite material comprising the steps of: providing a mixture of polyvinyl alcohol and a fibrous or non-fibrous cellulosic material; heating the mixture to a temperature of 190°C or greater; and
allowing the mixture to react to form a composite mixture;
allowing the mixture to cool to form an isotropic solid composite material.

## Description

This invention relates to composite materials comprising polyvinyl alcohol and cellulose-based fibres, the manufacture of the composites and products comprising or including the composites.

Polyvinyl alcohol is commonly made by hydrolysis of polyvinyl acetate. Polyvinyl alcohol manufactured by partial or complete hydrolysis of homopolymeric polyvinyl acetate is referred to as homopolymeric polyvinyl alcohol. The degree of hydrolysis determines the properties of the resultant polymer. Co-polymeric polyvinyl alcohols or homopolymeric polyvinyl alcohol with a low degree (LD) of hydrolysis are easy to process but have inferior mechanical and chemical properties. Homopolymeric polyvinyl alcohol with a high degree (HD) of hydrolysis, for example 85% or greater, has superior properties but is not processable without degradation under conditions using apparatus employed for manufacture of other polymers such as polyolefins. The present invention relates particularly to polyvinyl alcohol made by hydrolysis of homopolymeric polyvinyl acetate.

Highly hydrolysed polyvinyl alcohol, that is with a degree of hydrolysis greater than 70%, similar to many carbohydrates, decomposes before its melting point of about 250°C is reached. This makes melt processing difficult. For this reason the highly hydrolysed polymer has generally been processed as an aqueous solution. Partially hydrolysed polyvinyl alcohol is more easily melt processed.

The significant difference between highly hydrolysed (high degree of hydrolysis, HD) and partially hydrolysed (low degree of hydrolysis, LD) polyvinyl alcohols is the extent and quality of the crystalline order due to the differences in the chain structures. Polyvinyl alcohols with less than 2% non-hydrolysed acetate groups can readily crystallise to form strongly hydrogen bonding crystalline domains. These crystalline domains have a structure which is essentially the same as found in polyethylene. This may be attributed to the small size of the hydroxyl group. However, because of the hydrogen bonding, the melting point of highly hydrolysed polyvinyl alcohol is about 150°C higher than that of polyethylene.

Polyols have been used as plasticisers, but efficient manufacture of plasticised polyvinyl alcohol with a high degree of hydrolysis has been difficult to achieve.

WO2017/046361 discloses a method for manufacture of a plasticised polyvinyl alcohol having a degree of hydrolysis of 98wt% or higher.

According to a first aspect of the present invention, a method of manufacture of a composite material comprises the steps of:
providing a mixture of polyvinyl alcohol and a fibrous or non-fibrous cellulosic material;
heating the mixture to a temperature of 190°C or greater; and
allowing the mixture to react to form a composite mixture;
allowing the mixture to cool to form an isotropic solid composite material.

According to a second aspect of the present invention, a composite material comprises an isotropic reaction product of polyvinyl alcohol and a fibrous or non-fibrous cellulosic material;
wherein the amount of cellulosic material is in the range from about 0.1 wt% to about 50 wt% of the total weight of the composition.

The polyvinyl alcohol may be homopolymeric polyvinyl alcohol.

The composite material may be distinguished from a simple mixture or blend in which the polyvinyl alcohol and cellulosic ingredients are substantially unchanged. In embodiments, the cellulose fibres or non-fibrous cellulose particles may no longer be observed after reaction with the polyvinyl alcohol, so that an isotropic composite material is obtained.

A homogeneous composite may be obtained in which separate domains comprising cellulose are no longer present. The structure of the composite material may be determined using scanning electron microscopy.

The cellulosic material comprises fibrous or non-fibrous cellulose, for example, granular or powder forms of cellulose.

The cellulosic material may be selected from the group consisting of: cellulose pulp, unbleached cellulose pulp, enzymic treated cellulose pulp, chemically treated cellulose pulp, micro- and nano-fibrillated cellulose, modified cellulose, including methyl cellulose, hydroxypropyl cellulose, ethyl cellulose and mixtures thereof.

Cellulose esters, for example, cellulose acetate, are not employed.

The composite may exhibit a range of advantageous properties not attainable using unreacted mixtures of the two ingredients.

The composite material may be manufactured by controlled application of heat to a mixture of the polyvinyl alcohol and cellulosic material. For this purpose, the polyvinyl alcohol must be thermally processable under the necessary conditions for the reaction with cellulose.

A minimum temperature in the range of 190°C to 240°C may be employed, for example, in the range from 205°C to 215°C.

The reaction is preferably carried out in the absence of any solvent.

The reaction may be carried out by passing the mixture through an extruder maintained at a temperature from 190°C to 240°C. A fixed rotor speed may be employed.

The polyvinyl alcohol may be a polyvinyl alcohol composition comprising homopolymeric polyvinyl alcohol having a degree of hydrolysis of 65wt% to 98wt% or greater, and a molecular weight in the range of 4,000 to 20,000;
a plasticiser selected from the group consisting of: diglycerol, triglycerol, fructose, ribose, xylose, D-mannitol, triacetin, pentaerythritol, dipentaerythritol, methyl pentanediol, 1,2-propanediol, 1,4-butanediol, 2-hydroxy-1,3-propanediol, 3-methyl-1,3-butanediol, 3,3-dimethyl-1,2-butanediol, polyethylene glycol 300, polyethylene glycol 400, alkoxylated polyethylene glycol, caprolactam, tricyclic trimethylolpropane formal, rosin esters, erucamide, and mixtures thereof; and
an optional stabilizer selected from the group consisting of: sodium stearate, potassium oleate, sodium benzoate, calcium stearate, dimethyl, propionic acid and mixtures thereof.

The degree of hydrolysis may be 65 wt% to 98 wt%, for example, 67 wt% to 85 wt%, alternatively, 86 wt% to 93 wt%, for example, 94 wt% to 98 wt%

The polyvinyl alcohol composition may have a melt flow index (MFI) of 5 to 50, for example 10 to 35, for example 10 to 15g/10min. Melt flow indices referred to in this specification are determined at 230°C using a weight of 10kg by conventional techniques.

The polyvinyl alcohol may have a molecular weight in the range 4,000 to 20,000, for example, 4,000 to 15,000, for example 4,000 to 9,000, alternatively 12,000 to 20,000. Molecular weights referred to in this specification are weight average molecular weights and may be measured using conventional liquid chromatographic techniques.

The polyvinyl alcohol composition is preferably stable at the temperature at which it is melted and extruded. Polyvinyl alcohol, not containing a plasticiser and stabiliser as disclosed herein, particularly the homopolymer having a high degree of hydrolysis, is liable to decompose at the temperatures required for the reaction with cellulose, for example by melting and extrusion processing.

The stabilised polyvinyl alcohol polymers used in this invention may be manufactured using the method disclosed in WO2022/008516 and WO2022/008521, the disclosures of which are incorporated into this specification by reference for all purposes.

The polyvinyl alcohol composition may be made by a method comprising the steps of:
introducing into a mixing reactor a polyvinyl alcohol polymer comprising homopolymeric polyvinyl alcohol or a blend thereof having a degree of hydrolysis in the range of 65 wt% to 98 wt% or more;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet;
one or more secondary inlets located downstream from the primary inlet for introducing reactants comprising a processing aid, a plasticiser and a reactive stabiliser to the chamber to form a reaction mixture;
wherein the plasticiser is selected from the group disclosed above;
wherein the reactive stabiliser, when present, is selected from the group consisting of: sodium stearate, potassium oleate, sodium benzoate, calcium stearate, dimethyl propionic acid, and mixtures thereof;
wherein the blending chamber comprises a plurality of heated regions arranged so that the mixture is subjected to a temperature profile whereby the temperature increases from the inlet to the outlet;
a secondary outlet located between the reaction zone and primary outlet arranged to allow removal of processing aid from the chamber;
reacting the processing agent, plasticiser and polymer in the reaction zone to form plasticised polymer; and
allowing the plasticised polymer to pass from the primary outlet.

Use of a reactive mixing apparatus, typically an extruder in accordance with this invention allows the processing aid and plasticiser to be reacted with the polyvinyl alcohol or blend thereof, without decomposition of the polymer followed by removal of all or most of the processing aid from the secondary outlet to give plasticised polyvinyl alcohol or a blend thereof. This provides a polyvinyl alcohol composition suitable for reaction with the cellulosic material in accordance with the present invention.

Use of a reactive stabiliser may result in an advantageous reduction in the extent of degradation during melt processing, to form the composite of the present invention. This allows homopolymeric polyvinyl alcohol having a high degree of hydrolysis, for example 88 wt% or higher to be processed to form fibres, pellets, or other forms suitable for reaction with cellulose.

The reactive stabiliser may be used in an amount of about 0.1 wt% to about 5 wt%, for example about 0.1 wt% to about 3 wt%, for example 0.1 wt% to about 1.5 wt%, for example from about 0.2 wt% to about 0.5 wt%, for example about 0.25 wt%.

The reactive stabilisers of this invention may decrease the extent of degradation of the polymer during processing. Homopolymeric polyvinyl alcohol has been difficult to process due to degradation at the high temperatures required. The liability of degradation has led to use of polyvinyl alcohol co-polymers with a consequent loss of engineering properties. The extent of degradation can be determined by UV spectral analysis of the amount of conjugation present in the polymer. Sodium benzoate has been found to be particularly effective.

Use of homopolymeric polyvinyl alcohol is particularly advantageous. Homopolymeric polyvinyl alcohol is manufactured by hydrolysis of homopolymeric polyvinyl acetate, the degree of hydrolysis being 65 wt% or more in embodiments of this invention. Polyvinyl alcohol co-polymers made by hydrolysis of polyvinyl acetate co-polymers, as disclosed for example in US2005/001348 (Kohnen) have inferior properties compared to homopolymeric polyvinyl alcohol. Composites formed from homopolymeric polyvinyl alcohol and cellulose in accordance with this invention may exhibit advantageous properties, for example, high tensile strength and flexibility.

The polyvinyl alcohol may be manufactured by hydrolysis of homopolymeric polyvinyl acetate, wherein the extent of hydrolysis is in the range from 65 wt% to 98 wt%, for example 67 wt% to 85 wt%, for example 86 wt% to 93 wt%, for example 94 wt% to 98 wt%.

A blend of two or more polyvinyl alcohol polymers may be employed, for example a blend of two polyvinyl alcohol polymers with a relatively high molecular weight and a relatively low molecular weight respectively.

A blend of polyvinyl alcohols with the same molecular weight and different degrees of hydrolysis can be combined. Blending different polyvinyl alcohol grades together enables the properties of the resultant polymer to be enhanced, for example melt strength.

The blends of different molecular weight polymers employed are selected in accordance with the physical properties required in the finished product. This may require different molecular weight materials being used. Use of more than two different molecular weight polymers may be advantageous. The use of a single molecular weight polymer is not precluded.

Use of a blend may allow control of the viscosity of the polymer. Selection of a stabiliser in accordance with the present invention allows use of blends of a desired viscosity without a loss of other properties. Alternatively, use of a blend may permit use of polyvinyl alcohol with one or more stabilisers while maintaining viscosity or other properties to permit manufacture of pellets or films.

The processing aid is preferably water. Alternatively, the processing aid may comprise a mixture of water and one or more hydroxyl compound with a boiling point less than the boiling point or melting point of the plasticiser. Use of water is preferred for cost and environmental reasons.

In an embodiment, the plasticiser may be selected from the group consisting of: diglycerol, triglycerol, xylose, D-mannitol, triacetin, dipentaerythritol, 1,4-butanediol, 3,3-dimethyl-1,2-butanediol, and caprolactam.

Binary mixtures of the plasticisers may be advantageous.

The total amount of plasticiser in the formulation may be from about 15 wt% to about 30 wt%.

In an embodiment, the cellulose may comprise unbleached pulp fibres.

The amount of the unbleached pulp fibres may be in the range of about 0.1 wt% to about 50 wt%, preferably about 10 wt% to about 40 wt%.

In an embodiment, the cellulose may comprise enzymatically modified cellulose microfibres or nanofibres. The amount of enzymatically modified cellulose microfibres or nanofibres may be in the range of about 0.1 to about 30 wt%, preferably about 5 wt% to 20 wt%.

According to a further aspect of the present invention, there is provided a product comprising an isotropic reaction product of thermally processable homopolymeric polyvinyl alcohol having a degree of hydrolysis of 65 wt% or greater and cellulose. The product may be manufactured in accordance with the second aspect of the present invention.

Composites of the present invention exhibit advantageous properties. Composites comprising cellulose, for example, unbleached cellulosic pulp fibres and polyvinyl alcohol, may be stronger and exhibit higher tensile strength and lower ductility in comparison to the corresponding unfilled polyvinyl alcohol. Brittleness may be reduced. Increasing the amount of unbleached cellulosic pulp fibres may increase the tensile strength and tensile modulus of the composite allowing achievement of unexpectedly high values. In comparison to the individual components and physical mixtures of the individual components.

Composites of this invention may be used for manufacture of thermally processable pellets which may be processed by extrusion to form, for example, film, fibre and rigid thermoformed products, for example, food trays, bottles, and other containers. Unreacted cellulose products are not thermally processable, for example by extrusion or film coating.

Composites of this invention may be applied as coatings to substrates by melt extrusion. Cellulosic substrates such as paper or board may be coated.

According to a further aspect of this invention, there is provided a thermoformable pellet consisting of or comprising a composite in accordance with a previous aspect of this invention.

Composites containing unbleached cellulosic pulp fibres may change the inter and intra-molecular structure of the polyvinyl alcohol affecting both the crystallisation and physical behaviour of the composite. The addition of unbleached cellulosic pulp fibres may increase the glass transition temperature significantly. Without wishing to be bound by theory, this may indicate that the fibres restrict the segmental mobility of the polymer chains due to bonding interactions between the fibre and polymer chains. The enthalpies, melting and crystallisation temperatures may be increased, indicating an increase in the crystallinity of the polyvinyl alcohol. This may be due to the pulp fibres acting as a nucleating agent for the polyvinyl alcohol, increasing crystallinity and the size of crystallites.

Percentages and other quantities referred to in this specification are by weight unless stated otherwise and are selected from any ranges quoted to total 100%.

The invention is further described by means of example, but not in any limitative sense.

### Example 1

The following table shows properties of the composite comprising polyvinyl alcohol (PVOH), with 0 wt%, 10 wt%, 20 wt% and 30 wt% unbleached cellulosic pulp fibres.

**Table 1**

| | PVOH | PVOH+10% pulp | PVOH+20% pulp | PVOH+30% pulp |
|---|---|---|---|---|
| Thermal stability (°C) | 262.5 | 240.0 | 230.0 | 222.0 |
| Glass transition (°C) | 35.4 | 37.6 | 41.7 | 50.0 |
| Melting point (°C) | 200.3 | 201.8 | 207.3 | 208.7 |
| Young Modulus (GPa) | 2.75 | 2.82 | 4.46 | 6.92 |
| Strain at yield %) | 4.0 | 3.3 | 2.8 | 1.6 |
| Strain at break (%) | <30 | 5.8 | 2.6 | 1.6 |
| Strength at break (MPa) | 62.52 | 55.23 | 72.91 | 91.47 |
| Charpy impact strength notched (kJ/m²) | 6.00 | 2.53 | 3.02 | 1.99 |

### Example 2

The following table shows a comparison between composites comprising polyvinyl alcohol (PVOH) with and without fibre, polylactic acid (PLA) with and without fibre and polypropylene (PP) with and without cellulose fibre.

**Table 2**

| Sample | Tensile Stress σₘ (MPa) | Elasticity Eₜ (MPa) | Strain at yield ε_{y} (%) | Strain at break ε_{b} (%) | Charpy Notched Impact Strength U_{N} (kJ/m²) |
|---|---|---|---|---|---|
| PVOH | 63 | 2700 | 4.0 | <30 | 6.0 |
| PVOH+30% fibre | 92 | 6900 | 1.6 | 1.6 | 2.0 |
| PLA | 68 | 3500 | 2.5 | 5.6 | 1.6 |
| PLA+30% fibre | 78 | 7500 | 1.7 | 1.7 | 2.4 |
| PP | 24 | 1700 | 4.4 | >20 | 7.2 |
| PP+30% fibre ^{∗} | 40 | 3900 | 4.5 | 4.5 | 4.1 |

| | | | | | |
|---|---|---|---|---|---|
| ^{∗} Contains compatibilizer | | | | | |

The properties of the composites of this invention were superior to those of polypropylene. The composites containing PLA did not exhibit good barrier properties.

The polyvinyl alcohol used had the following properties:

| Property | Unit | Test Method | Polyvinyl alcohol |
|---|---|---|---|
| Particle size | mm | ISO 2591 | 4-5 |
| Bulk density | kg/m³ | | 620-720 |
| Solid density | kg/m³ | | 1250-1350 |
| Melting temperature (peak) | °C | DSC | 209 |
| Melt flow rate (MFR) 210°C, 2.16 kg | g/10mins | ISO 1133 | 20-35 |

The composites of this invention may be used for manufacture of environmentally sustainable multi-functional packaging materials. These materials may provide advantageous thermal and mechanical properties, including barrier, anti-bacterial, antioxidant and UV-blocking properties. The composites may also find application in manufacture of engineering components, such as automotive and aerospace components.

### Example 3

### Pulp conditioning

Dry cellulosic pulp (92% dry solids content Nordic Paper UKP, unbleached soft wood kraft pulp from Swedish pine and spruce) was disintegrated by running it through a twin screw extruder at 50°C and 150 rpm. The extruder was open at the front and had screws without mixing segments. The resulting powder was a homogeneous pulp powder with a dry content of 95 wt% and a degradation temperature of 250°C.

### Example 4

### Extrusion of polyvinyl alcohol-cellulose pulp composites

Mixtures were prepared containing a blend of polyvinyl alcohol, 98 wt% degree of hydrolysis and molecular weight of 160,000 (50 wt%) and polyvinyl alcohol with a 94 wt% degree of hydrolysis and molecular weight of 55,000 (50 wt%) and 0, 10, 20 and 30 wt% of unbleached pulp fibres.

The components were added into the feed hoppers and processed by extrusion through a co-rotating twin-screw extruder Lab Tech LTE-20-48 with a screw diameter of 20mm and length/depth ratio of 48. The feeding rate was 50g/min. The official speed was 200 rpm. 12 consecutive heating zones were maintained at the following temperatures (°C): 90, 90, 70, 190, 190, 190, 200, 200, 210, 215, 220, 230, 230, 220, 200.

After leaving the die zone, the material was allowed to flow over a conveyor at 9.2 rpm and was cooled using fans.

### Example 5

### Testing of cellulose pulp/polyvinyl alcohol composites

Pellets obtained from the previous example were injection-moulded in a BOY 25 E VH injection molding apparatus to provide samples for tensile and impact tests. The injections were performed using the following temperature profile and a 20°C mould. Five heating zones were maintained at 215, 225, 225, 190 and 180°C respectively. The injection was set at 1200 bar and 10cm³/s.

Tensile testing was carried out using a procedure based on ISO 527.

Samples were conditioned at 50% humidity at 25°C for at least 72 hours prior to the test. The tensile modulus, strength and strain at break were measured using an MTS Flex Test 60 Controlled Hydraulic Actuator with an initial speed of 1mm/min that was increased to 50mm/min after 0.5% strain. Data was collected using MTS SERIES 793 Controlled Software at a rate of 500 Hz.

Impact testing procedure was performed using Charpy Notched Impact Tests on a Zwick/Roell HIT 5P Impact Tester using a 5J Pendulum. This measured the toughness of the materials under impact load by the deformation required to fracture the specimen.

Differential Scanning Calorimetry (DSC) was based on ISO 11357-3:2018 Procedure. DSC measurements were obtained on a Mettler-Toledo DSC822e calorimeter. The tests were run under nitrogen atmosphere with a flow rate of 50mL.min⁻¹. Amounts of 4 mg of each sample were placed in standard aluminium crucibles (40µL). The thermal programme was set to 98°C.min⁻¹. Thermogravimetric Analysis (TGA) was based on the ASTM E2550 Procedure. TGA Measurements were obtained using a Mettler-Toledo 851 instrument. The tests were run under nitrogen atmosphere with a flow rate of 50mL.min⁻¹. Amounts of 8mg of each sample was placed in ceramic cups. The thermal programme was set to 10°C.min⁻¹ from 30°C to 400°C. The results are shown in Table 3.

| | | | | |
|---|---|---|---|---|
| Young Modulus (GPa) | 2.75 | 2.82 | 4.46 | 6.92 |
| Strain at yield (%) | 4.0 | 3.3 | 2.8 | 1.6 |
| Strain at break (%) | <30 | 5.8 | 2.6 | 1.6 |
| Strength at break (MPa) | 62.5 | 55.2 | 72.9 | 91.5 |
| Charpy Notched Impact Strength (kJ/m²) | 6.0 | 2.53 | 3.0 | 2.0 |

### Example 6

### Manufacturer of Enzymatic Cellulose Nanofibre (CNF) Reinforcing Agent

Refined pulp with a 4 wt% pulp consistency was treated with an enzymatic cocktail obtained from Novonzyme in a sulphate buffer solution at pH7.2 at 50°C for 2 hours. Examples of the pre-treated pulps with a fibre consistency of 2 wt% were homogenised using a high pressure fluidiser Microfluidiser-110 EH (Microfluidics Corp., USA) through a 200/100 µM chamber at 1700 bar.

The properties of the treated fibres were as follows:

| | |
|---|---|
| Length (µm) | 14.05 |
| Shear viscosity at 1s⁻¹ | 34.4 |
| Charge density (ueq/g) | 24 |
| Crystallinity (%) | 39 |
| Nanofraction (%) | 7.2 |
| Mw (Da) | 95884 |
| Zeta potential | -21.5 |
| Degree of polymerisation | 591 |

### Comparative Example 7

### Manufacture of composite

A comparative example was carried out using dispersion at 70°C followed by film casting.

Polyvinyl alcohol pellets were dissolved in water at 70°C with stirring to obtain a 10 wt% suspension. 2 wt% cellulose nanofibers, heated to 70°C and mixed with the polyvinyl alcohol solution with stirring at 500 rpm for 2 hours to obtain composites with 5 wt%, 10 wt% and 20 wt% of cellulose nanofibre. The samples were sonicated using an ultra Turuz to eliminate fibre aggregations in order to provide a homogeneous dispersion. The samples were vacuum degassed after sonification to eliminate any bubbles.

The suspensions were transferred to square petri dishes and maintained at room temperature. Transparent films of 22.5cm dimension were obtained with an average thickness of 431 ± 51µ and a weight of approximately 23g.

The films were cut, dried and compounded in a HAAKE Mini Lab II Counter Rotating Twin Screw Extruder at 220°C and 100 rpm to obtain pellets of the composite.

Samples of the pellets were pressed at 220°C with 25kN force to a thickness of 0.4mm using a Servitec Polystat 200 T Laboratory Hot Press. The compounded samples were cut to obtain seven stripes with a dimension of 45 x 6 mm. The samples were reconditioned at 50% humidity and 23°C for at least 30 hours prior to testing. The tensile modulus, strength, strain at break and tensile E absorption was measured using an MTS Tensile Strength Machine with a speed of 3ml/min and an initial gap between the holders of 30mm.

Dynamic Scanning Calorimetry (DSC) based on ISO 11357-3:2018. Live DSC measurements were obtained on a Mettler-Toledo DSC 822e Calorimeter. The tests were run under a nitrogen atmosphere with a flow rate of 50 mL/min⁻¹. 4 mg of each sample was placed in a standard aluminium crucible (40 µL). The thermal program was set to 10°C (min⁻¹) as follows:-
a) heating stage from -10°C to 200°C
b) an isothermal stage at 200°C for 1 min
c) cooling from 200°C to -10°C
d) an isothermal stage at -10°C for 1 min
e) heating stage from -10°C to 400°C

Thermo-Gravimetric Analysis (TGA) was carried out according to ASTM E2550. TGA measurements were obtained in a Mettler-Toledo 851. The tests were run under a nitrogen atmosphere with a flow rate of 50mL min⁻¹. 8mg of each sample were placed in ceramic cups. The thermal programme was set for 10°C min⁻¹ from 30°C to 400°C.

The method of this invention resulted in composites with an improved tensile strength and tensile modulus but with a decreased elongation and toughness in comparison to composites from method 1. Addition of enzymatic cellulose nanofibres into the polyvinyl alcohol resulted in stronger and stiffer composites but strain and toughness were reduced in comparison to pure polyvinyl alcohol. A clear correlation between the cellulose nanofibre content, the tensile strength and modulus was observed during the compounding. Two formulations reach the highest values in composites with 20 wt% of cellulose nanofibre. Addition of cellulose nanofibre increased the glass transition temperature. This may indicate that the fibres restricted segmental mobility of the polymer chains during the reaction. Compounding by extrusion gave a decrease in the degree of crystallinity and the melting and crystallinity temperatures when the cellulose nanofibre content was greater than 5 wt%. This may indicate that cellulose nanofibre hinders crystallisation of the polyvinyl alcohol or causes degradation of the polymer chains. Extrusion was carried out at 220°C. The results are summarised in the following Tables:-

| Example 6 | PVOH | PVOH+5% CNF | PVOH+10% CNF | PVOH+20% CNF |
|---|---|---|---|---|
| Thermal stability (°C) | 260.5 | 240 | 226 | 202 |
| Glass Transition (°C) | 44.0 | 43.0 | 47.3 | 50.7 |
| Melting Point (°C) | 202.9 | 205.3 | 188.5 | 184.0 |
| Young Modulus (GPa) | 0.721 | 0.690 | 1.440 | 1.978 |
| Strain at break (%) | 34.2 | 8.7 | 3.7 | 3.0 |
| Strength at break (MPa) | 21.94 | 21.0 | 33.32 | 41.81 |
| TEA Index (kJ/kg) | 7.70 | 1.38 | 0.63 | 0.5 |

| Comparative Example 7 | PVOH | PVOH+5% CNF | PVOH+10% CNF | PVOH+20% CNF |
|---|---|---|---|---|
| Thermal stability (°C) | | | | |
| Glass Transition (°C) | 34.0 | 41.8 | 43.7 | 41.3 |
| Melting Point (°C) | 202.6 | 205.9 | 204.8 | 200.7 |
| Young Modulus (GPa) | 0.140 | 0.547 | 0.440 | 0.507 |
| Strain at break (%) | 363.4 | 147.44 | 63.78 | 10.03 |
| Strength at break (MPa) | 24.76 | 32.23 | 28.23 | 18.56 |
| TEA Index (kJ/kg) | 61.77 | 231.03 | 9.58 | 1.45 |

### Example 8

Further compositions were investigated.

The polyvinyl alcohols used were partially hydrolyzed with low molecular weight and a degree of hydrolysis of 67% to 89%, as follows:

| PVOH reference | Characteristics | Molecular Weight, GPC (g/mol) | Degree of Hydrolysis (%) | Viscosity 4% solution |
|---|---|---|---|---|
| A | Partially Hydrolyzed, low Mw | 12700 | 86-89 | 4-5 |
| B | Partially Hydrolyzed, low Mw | 14500 | 86-89 | 8-10 |
| C | Sub-Partially Hydrolyzed, low Mw | 4785 | 67-72 | 5.5-6.5 |
| D | Sub-Partially Hydrolyzed, low Mw | 4195 | 72-76 | 5-6 |

The plasticizers employed are listed below. Water was used as a processing aid and sodium benzoate as stabilizer.

| Chemical Name | Molecular weight (g/mol) | Melting point (°C) | Boiling point (°C) |
|---|---|---|---|
| Di-pentaerythritol | 254.28 | 215-218 | 356 |
| Triacetin | 218 | 3 | 258 |
| ε-caprolactone | 114.14 | -1 | 241 |

The following formulations were prepared using various commercial cellulose products. Cellulose Type 1. Microcrystalline white cellulose, particle size 6-12µm.

| | Formulation | 1 | 2 | 3 | 4 | 5 | 6 | 7 | 8 | 9 | 10 |
|---|---|---|---|---|---|---|---|---|---|---|---|
| PVOH | A | 51.01 | 51.01 | 49.26 | 49.26 | 47.5 | 47.5 | 45.75 | 43.53 | | |
| | B | 21.86 | 21.86 | 21.11 | 21.11 | 20.36 | 20.36 | 19.61 | 18.65 | | |
| | C | | | | | | | | | 65.79 | |
| | D | | | | | | | | | | 65.79 |
| Additives | Water | 9.39 | 9.39 | 9.39 | 9.39 | 9.39 | 9.39 | 9.39 | 7.75 | 4.13 | 4.13 |
| | Triacetin | 10 | 10 | 10 | 10 | 3.33 | 6.67 | 6.67 | 8.25 | 8.25 | 8.25 |
| | Di-Penta | 4.99 | | 4.99 | | | | | 4.11 | 4.12 | 4.12 |
| | ε -caprolactone | | 4.99 | | 4.99 | 6.67 | 3.33 | 3.33 | | | |
| | Sodium Benzoate | 0.25 | 0.25 | 0.25 | 0.25 | 0.25 | 0.25 | 0.25 | 0.21 | 0.21 | 0.21 |
| Cellulose | Type 1 | 2.5 | 2.5 | 5 | 5 | 2.5 | 2.5 | 5.0 | 2.5 | 2.5 | 2.5 |

Cellulose Type 2. Microcrystalline white cellulose, particle size 5-12 µm with high surface area

| | Formulation | 1 | 2 | 3 | 4 | 5 | 6 | 7 | 8 | 9 | 10 |
|---|---|---|---|---|---|---|---|---|---|---|---|
| PVOH | A | 51.01 | 51.01 | 49.26 | 49.26 | 47.5 | 47.5 | 45.75 | 43.53 | | |
| | B | 21.86 | 21.86 | 21.11 | 21.11 | 20.36 | 20.36 | 19.61 | 18.65 | | |
| | C | | | | | | | | | 65.79 | |
| | D | | | | | | | | | | 65.79 |
| Additives | Water | 9.39 | 9.39 | 9.39 | 9.39 | 9.39 | 9.39 | 9.39 | 7.75 | 4.13 | 4.13 |
| | Triacetin | 10 | 10 | 10 | 10 | 3.33 | 6.67 | 6.67 | 8.25 | 8.25 | 8.25 |
| | Di-Penta | 4.99 | | 4.99 | | | | | 4.11 | 4.12 | 4.12 |
| | ε-caprolactone | | 4.99 | | 4.99 | 6.67 | 3.33 | 3.33 | | | |
| | Sodium Benzoate | 0.25 | 0.25 | 0.25 | 0.25 | 0.25 | 0.25 | 0.25 | 0.21 | 0.21 | 0.21 |
| Cellulose | Type 2 | 2.5 | 2.5 | 5 | 5 | 2.5 | 2.5 | 5.0 | 2.5 | 2.5 | 2.5 |

Cellulose Type 3. Microcrystalline white cellulose, ultra low lignin

| | Formulation | 1 | 2 | 3 | 4 | 5 | 6 | 7 |
|---|---|---|---|---|---|---|---|---|
| PVOH | A | 51.01 | 51.01 | 49.26 | 49.26 | 4m7.5 | 47.5 | 45.75 |
| | B | 21.86 | 21.86 | 21.11 | 21.11 | 20.36 | 20.36 | 19.61 |
| Additives | Water | 9.39 | 9.39 | 9.39 | 9.39 | 9.39 | 9.39 | 9.39 |
| | Triacetin | 10 | 10 | 10 | 10 | 3.33 | 6.67 | 6.67 |
| | Di-Penta | 4.99 | | 4.99 | | | | |
| | ε-caprolactone | | 4.99 | | 4.99 | 6.67 | 3.33 | 3.33 |
| | Sodium Benzoate | 0.25 | 0.25 | 0.25 | 0.25 | 0.25 | 0.25 | 0.25 |
| Cellulose | Type 3 | 2.5 | 2.5 | 5 | 5 | 2.5 | 2.5 | 5.0 |

Cellulose Type 4 - Cellulose fibre/polylactic acid composite (85:15)

| | Formulation | 1 | 2 | 3 | 4 | 5 | 6 | 7 | 8 |
|---|---|---|---|---|---|---|---|---|---|
| PVOH | A | 51.01 | 51.01 | 49.26 | 49.26 | | | | |
| | B | 21.86 | 21.86 | 21.11 | 21.11 | | | | |
| | C | | | | | 77.85 | | 78.8 | |
| | D | | | | | | 77.85 | | 78.8 |
| Additives | Water | 9.39 | 9.39 | 9.39 | 9.39 | 4.85 | 4.85 | 4 | 4 |
| | Triacetin | 10 | 10 | 10 | 10 | 9.71 | 9.71 | 8 | 8 |
| | Di-Penta | 4.99 | | 4.99 | | 4.85 | 4.85 | 4 | 4 |
| | ε -caprolactone | | 4.99 | | 4.99 | | | | |
| | Sodium Benzoate | 0.25 | 0.25 | 0.25 | 0.25 | 0.24 | 0.24 | 0.20 | 0.20 |
| Cellulose | Type 4 | 2.5 | 2.5 | 5 | 5 | 2.5 | 2.5 | 5 | 5 |

Cellulose Type 5 - Hydrophobically modified high aspect ratio wood fibre Cellulose Type 6 - Soluble modified plant fibre

| | Formulation | 1 | 2 | 3 | 4 | 5 | 6 | 7 |
|---|---|---|---|---|---|---|---|---|
| PVOH | A | 51.01 | 51.01 | 49.26 | 51.01 | 51.01 | 50.12 | 47.50 |
| | B | 21.86 | 21.86 | 21.11 | 21.86 | 21.86 | 21.48 | 20.36 |
| Additives | Water | 9.39 | 9.39 | 9.39 | 9.39 | 9.39 | 8.92 | 9.39 |
| | Triacetin | 10 | 10 | 10 | 10 | 10 | 9.5 | 6.67 |
| | Di-Penta | 4.99 | | 4.99 | 4.99 | | 4.74 | |
| | ε-caprolactone | | 4.99 | | | 4.99 | | 3.33 |
| | Sodium Benzoate | 0.25 | 0.25 | 0.25 | 0.25 | 0.25 | 0.24 | 0.25 |
| Cellulose | Type 5 | 2.5 | 2.5 | 5 | | | | |
| | Type 6 | | | | 2.5 | 2.5 | 5 | 2.5 |

### Results

Thermal analysis including differential scanning calorimetry (DSC) and thermogravimetric analysis (TGA) were used to investigate the thermal stability of the composites and to observe melting and recrystallization temperatures of the polymers. The crystallinity (%) was calculated and estimated by DSC.

TGA analysis of the cellulose samples was carried out to determine the thermal stability of the pure cellulose before compounding with PVOH. Cellulose Types 3 and 4 showed the highest thermal stability.

According to DSC, TGA analysis and Torque stabiliser (batch mixer) it was concluded that PVOH/cellulose was compatible for compounding and some of these formulations are suitable for the scale up.

TGA analysis showed that after the addition of cellulose, the PVOH polymer still showed thermal stability up to at least 230°C.

DSC analysis demonstrated the thermal stability of the composite.

Changing the plasticizer from dipentaerythritol to ε-caprolactone was effective in lowering the melt peak and recrystallization temperature, as shown in the following Table.

| Cellulose | Plasticizer | Melt peak 1^{st} Heating (°C) | Melt peak 2^{nd} heating (°C) | Recrystallization peak (°C) | Crystallinity 1^{st} heating (%) | Crystallinity 2^{nd} heating (%) |
|---|---|---|---|---|---|---|
| 2.5% Type 3 | Di-Penta | 188 | 162 | 113 | 32.61 | 14.04 |
| 2.5% Type 3 | ε-caprolactone | 183 | 154 | 88 | 22.42 | 10.52 |
| 2.5% Type 1 | Di-Penta | 191 | 168 | 112 | 27.60 | 19.70 |
| 2.5% Type 1 | ε-caprolactone | 185 | 154 | 93 | 14.48 | 11.15 |

Batch mixer studies showed that compounding happened smoothly. After a maximum peak, the torque reached a constant level and there was no sign of degradation or incompatibility. Also, by addition of the cellulose the maximum torque increased, confirming that more energy was required for compounding due to the presence of cellulose. The polymers were blended at a fixed rotor speed, while the torque was recorded as a function of time. The results showed the thermomechanical history experienced by the polymers under mixing. When the polymers were introduced in the mixing chamber the torque increased due to the energy required to melt and compound the polymers. The torque then decreased and reached a steady state.

For the cellulose/PVOH composite formulations, a single peak was observed. This showed that a single reaction took place. No crosslinking or degradation occurred during the residence time that was needed to process the polymer. There is no sign of incompatibility between the polymers.

By addition of the cellulose the maximum torque increased, confirming that more force and energy was required for compounding due to the presence of cellulose. It was concluded that the resultant PVOH/cellulose composite had greater strength than the unreacted PVOH.

The TGA and DSC measurements indicated that the composite exhibited thermal stability. A greater temperature stability at temperatures higher than 230°C is significant as both individual unreacted polymers exhibit lower stability under these temperature conditions. This shows a permanent interaction between the polymers. This was confirmed by SCM analysis which showed that no individual original polymer domains are present in the composite. This was also shown in the difference in crystallisation shown by DSC analysis.

## Claims

1. A method of manufacture of a composite material comprising the steps of:
providing a mixture of polyvinyl alcohol and a fibrous or non-fibrous cellulosic material;
heating the mixture to a temperature of 190°C or greater; and
allowing the mixture to react to form a composite mixture;
allowing the mixture to cool to form an isotropic solid composite material.

2. A method as claimed in claim 1, wherein the polyvinyl alcohol is homopolymer polyvinyl alcohol.

3. A method as claimed in any preceding claim, wherein the cellulose material is fibrous, granular or powdered cellulose.

4. A method as claimed in any preceding claim, wherein the cellulose material is selected from the group consisting of: unbleached cellulose pulp, enzymic treated cellulose pulp, chemically treated cellulose pulp, micro- and nano-fibrillated cellulose, modified cellulose, methyl cellulose, hydroxypropyl cellulose, ethyl cellulose and mixtures thereof.

5. A method as claimed in any preceding claim, wherein the polyvinyl alcohol has a degree of hydrolysis of 65 wt% to 98 wt%, or more, preferably 67 wt% to 85 wt%.

6. A method as claimed in claim 5, wherein the polyvinyl alcohol has a degree of hydrolysis of 94 wt% to 98 wt% or more.

7. A method as claimed in any preceding claim, wherein the polyvinyl alcohol comprises homopolymeric polyvinyl alcohol having a degree of hydrolysis of 70wt% to 98wt% or greater, and a molecular weight in the range of 20,000 to 140,000;
a plasticiser selected from the group consisting of: diglycerol, triglycerol, fructose, ribose, xylose, D-mannitol, triacetin, pentaerythritol, dipentaerythritol, methyl pentanediol, 1,2-propanediol, 1,4-butanediol, 2-hydroxy-1,3-propanediol, 3-methyl-1,3-butanediol, 3,3-dimethyl-1,2-butanediol, polyethylene glycol 300, polyethylene glycol 400, alkoxylated polyethylene glycol, caprolactam, tricyclic trimethylolpropane formal, rosin esters, erucamide, and mixtures thereof; and
a stabilizer selected from the group consisting of: sodium stearate, potassium oleate, sodium benzoate, calcium stearate, dimethyl, propionic acid and mixtures thereof.

8. A method as claimed in any preceding claim, wherein the polyvinyl alcohol composition has a melt flow index (MFI) in the range from 5 to 50, preferably 10 to 35, more preferably 10 to 15g/10min.

9. A method as claimed in any preceding claim, wherein the polyvinyl alcohol has a molecular weight in the range 4,000 to 20,000, preferably 4,000 to 15,000, more preferably 4,000 to 9,000.

10. A method as claimed in any preceding claim, wherein the polyvinyl alcohol has a molecular weight in the range 12,000 to 20,000.

11. A method as claimed in any preceding claim, wherein the mixture is heated to a temperature in the range from 190°C to 240°C, preferably 205°C to 215°C.

12. A method as claimed in any preceding claim, wherein the mixture is heated by passage through an extruder.

13. A composite material comprising an isotropic reaction product of polyvinyl alcohol and a cellulose material in an amount of 0.1 wt% to 50 wt% of the total weight of the composite material.

14. A composite material comprising an isotropic reaction product of polyvinyl alcohol and a cellulose material, made by the method of any preceding claim.

15. Thermally processable pellets consisting of or comprising a composite material as claimed in claim 14.

16. A coated substrate, wherein the coating comprises a composite material as claimed in claim 13 or 14.
